Europäisches Patentamt

European Patent Office

Office européen des brevets

(11) Numéro de publication: **0 360 312**
**A1**

## (12) DEMANDE DE BREVET EUROPEEN

(21) Numéro de dépôt: 89202149.4

(22) Date de dépôt: 25.08.89

(51) Int. Cl.⁵: **F16L 47/00**

(30) Priorité: 07.09.88 FR 8811777

(43) Date de publication de la demande:
**28.03.90 Bulletin 90/13**

(84) Etats contractants désignés:
**AT BE DE ES FR GB GR IT NL**

(71) Demandeur: **DRAKA POLVA B.V.**
**Vlaardingenlaan 11**
**NL-1062 HM Amsterdam(NL)**

(72) Inventeur: **Ten Kroode, Paulus A.N.**
**Ferdinand Bolstraat 147-1**
**NL-1072 LH Amsterdam(NL)**

(74) Mandataire: **Bouchoms, Maurice et al**
**Solvay & Cie Département de la propriété**
**industrielle 310, rue de Ransbeek**
**B-1120 Bruxelles(BE)**

(54) **Raccord de dérivation.**

(57) Raccord de dérivation pour tuyauterie en matière thermoplastique comportant un élément de fixation (3) entourant la tuyauterie (1) à raccorder et équipé d'un élément de raccordement tubulaire (5) comportant un filetage intérieur (6) et un élément de branchement tubulaire comportant un filetage extérieur (7) pouvant coopérer avec le filetage intérieur (6) précité, et équipé d'un moyen permettant son obturation temporaire tel qu'un robinet (9), d'un tube latéral de dérivation (16), d'un outil de fraisage tubulaire (13) disposé dans l'axe de l'élément de branchement et débordant de celui-ci et d'un joint annulaire d'étanchéité (15) disposé autour de la partie débordante de l'outil de fraisage et en retrait de son extrémité de façon telle que, dans le raccord de dérivation monté en service sur la tuyauterie, ce joint (15) est disposé entre la périphérie de la perforation réalisée dans la tuyauterie (1) par l'outil de fraisage (13) et la surface externe de cet outil en retrait de son extrémité.

Le raccord est utilisable pour le raccordement de dérivations dans les réseaux de distribtuion d'eau et de gaz.

FIG. 1

## Raccord de dérivation

La présente invention concerne un raccord de dérivation pour tuyauterie en matière thermoplastique comportant un élément de fixation entourant la tuyauterie équipé d'un élément de raccordement et un élément de branchement comportant un moyen permettant son obturation temporaire, un tube latéral de dérivation, un outil de fraisage disposé dans l'axe de l'élément de branchement et un joint annulaire d'étanchéité.

Des raccords de dérivation sont couramment exploités dans les réseaux de distribution d'eau potable et de gaz afin de connecter de façon étanche des conduites individuelles à une tuyauterie principale. Ainsi qu'il est montré dans le brevet BE-A-833318 (DRAKA POLVA B.V.), dans le raccord de ce type, l'étanchéité entre la tuyauterie principale et l'élément de fixation est assurée par un joint annulaire d'étanchéité logé dans une rainure annulaire ménagée dans la paroi interne de l'élément de fixation autour de l'orifice du branchement tubulaire. Lors du serrage de cet élément de fixation sur la tuyauterie principale, le joint est alors comprimé contre la paroi externe de cette tuyauterie et assure ainsi l'étanchéité entre l'élément de fixation et la tuyauterie. Une étanchéité efficace à ce niveau s'obtient par un réglage rigoureux de la pression exercée sur le matériau d'étanchéité. A cet effet, l'élément de fixation doit assurer un serrage suffisant sur la tuyauterie.

Le serrage peut toutefois induire des tensions inadmissibles dans la paroi de cette dernière donnant naissance à des fragilités mécaniques au niveau de la tuyauterie ou du raccord.

De plus, l'assemblage des raccords de dérivation se fait le plus fréquemment sur une tuyauterie principale en service, et donc sous pression. En utilisant des raccords de dérivation classique, comme décrits notamment dans le brevet précité, une quantité assez importante du fluide véhiculé par la tuyauterie peut s'échapper lors du montage via le branchement tubulaire. Ceci peut donner naissance à des situations dangereuses, spécia-lement lorsque le fluide véhiculé par la tuyauterie est du gaz. Afin d'éviter ces inconvénients, des améliorations ont déjà été proposées, notamment dans les brevets USA-A-2839075, USA-A-3045512 et la demande de brevet NL-7200439 qui font appel à des raccords équipés de moyen d'obturation temporaire. Si la perte du gaz lors du montage de tels raccords de dérivation est diminuée, une étanchéité complète lors du montage n'est pas réalisée avec certitude.

La présente invention a pour but de fournir un raccord de dérivation du type décrit ci-avant dans lequel le risque d'induire des tensions inadmissibles dans le tuyau est minime et qui reste étanche lors et après son montage.

L'invention concerne, dès lors un raccord de dérivation pour tuyauterie en matière thermoplastique comportant un élément de fixation entourant la tuyauterie à raccorder et équipé d'un élément de raccordement tubulaire comportant un filetage intérieur et un élément de branchement tubulaire comportant un filetage extérieur pouvant coopérer avec le filetage intérieur précité, et équipé d'un moyen permettant son obturation temporaire tel qu'un robinet, d'un tube latéral de dérivation, d'un outil de fraisage tubulaire disposé dans l'axe de l'élément de branchement et débordant de celui-ci et d'un joint annulaire d'étanchéité qui se caractérise en ce que le joint annulaire d'étanchéité est disposé autour de la partie débordante de l'outil de fraisage et en retrait de son extrémité de façon telle que, dans le raccord de dérivation monté en service sur la tuyauterie, ce joint est disposé entre la périphérie de la perforation réalisée dans la tuyauterie par l'outil de fraisage et la surface externe de cet outil en retrait de son extrémité.

Le raccord selon l'invention présente comme avantage que l'élément de fixation équipé d'un branchement tubulaire n'est jamais mis en contact avec le fluide traversant la tuyauterie et que ledit élément n'est donc pas soumis à la pression intérieure du fluide circulant dans celle-ci. De ce fait, on peut conférer une épaisseur plus faible de matériau pour sa réalisation et la matière thermoplastique à utiliser pour ledit élément peut être choisie dans une gamme plus large de matières thermoplastiques.

Le joint d'étanchéité est en général réalisé en matériau élastique qui peut être notamment du caoutchouc naturel ou synthétique.

Selon un mode de réalisation avantageux le joint est disposé autour de l'outil de fraisage entre la partie utile de l'outil et l'extrémité de l'élément de branchement.

De préférence, le joint d'étanchéité est logé dans une rainure prévue dans la paroi externe de l'extrémité débordante de l'outil de fraisage. Les dimensions et le positionnement de cette rainure sont choisis de façon telle qu'en position de montage le joint d'étanchéité puisse assurer la fonction prévue. La hauteur du joint annulaire est choisi de façon telle que l'élément de branchement puisse effectuer une éventuelle rotation de 360°C sans que ledit joint ne perde son efficacité.

L'élément de fixation peut être constitué par des éléments en forme de selle ou de coquille comme décrit dans le brevet belge A-833318 précité. Toutefois dans ce cas le réglage de la pression

exercée par ces éléments sur la tuyauterie est délicat.

Selon un mode de réalisation plus avantageux cet élément de fixation peut être réalisé sous forme d'un élément tubulaire ouvert qui est inséré autour de la tuyauterie et qui est fixé sur la tuyauterie par un système à grenouillère prévu sur les extrémités ouvertes.

La fermeture de l'élément est située dans un angle de 15 à 45 degrés par rapport à l'axe de l'élément de raccordement tubulaire, et de préférence entre 25 et 35 degrés. L'épaisseur minimum de l'élément de fixation est située à l'opposé du système de fermeture dudit élément. L'épaisseur minimum remplit la fonction d'une charnière élastique et donne la possibilité d'ouvrir l'élément afin de le placer autour de la tuyauterie lors du montage du raccord. L'épaisseur de l'élément de fixation varie de façon continue depuis son épaisseur minimum jusqu'à une épaisseur maximum située au niveau de la fermeture dudit élément.

Pour la réalisation de cet élément, on peut faire appel aux techniques usuelles de moulage par injection, les épaisseurs minimum et maximum de l'élément n'étant pas critiques. En général, on préfère toutefois que l'épaisseur minimum assurant la fonction de charnière soit comprise entre 1 et 5 mm et que l'épaisseur maximum soit comprise entre 2 et 25 mm.

Etant donné que le fluide véhiculé par la tuyauterie n'entre pas en contact avec l'élément de fixation, la matière thermoplastique à utiliser pour réaliser ledit élément peut être choisie d'une façon arbitraire dans une large gamme de matières thermoplastiques. De préférence, la matière thermoplastique conférant la rigidité et l'élasticité requises à l'élément de fixation est choisie parmi les résines vinyliques tel que le polychlorure de vinyle, les polyoléfines, de préférence, le polyéthylène haute densité, les polyoxyméthylènes et les polyamides.

L'élément de raccordement tubulaire fait de préférence partie intégrante avec l'élément de fixation et est disposé de façon à être perpendiculaire à la tuyauterie à raccorder.

L'élément de branchement tubulaire est généralement en forme de T.

Le corps principal est équipé intérieurement d'un outil de fraisage tubulaire de préférence métallique disposé coaxialement dont la fonction est de perforer la paroi de la tuyauterie lors de l'engagement de l'élément de branchement dans le filetage de l'élément de raccordement.

Selon un mode de réalisation préféré, l'outil de fraisage tubulaire est de préférence fixé de façon permanente dans l'élément de branchement. Selon un premier mode de réalisation, l'outil de fraisage est fixé dans l'élément de branchement à l'aide d'une colle. Dans un autre mode de réalisation, l'outil de fraisage est fixé dans l'élément de branchement par injection d'une matière thermoplastique fondue autour de l'outil de fraisage en l'utilisant comme insert.

L'outil de fraisage est pourvu de passages latéraux laissant passer le gaz de la tuyauterie principale dans l'élément de branchement tubulaire. Les passages peuvent avoir une section quelconque droite, circulaire, ovale, rectangulaire, polygonale, etc.

Une des branches du T de l'élément de branchement tubulaire est avantageusement exploitée pour loger le noyau permettant l'obturation temporaire de l'élément de branchement, ce moyen pouvant être notamment un robinet ou une vanne. L'autre branche du T de l'élément de branchement tubulaire constitue avantageusement le tube latéral de dérivation et, à cet effet, est équipé de moyens permettant son raccordement à une conduite de dérivation.

Ces moyens de raccordements peuvent être du type de celui décrit dans la brevet français A-2285567 (DRAKA POLVA B.V.).

Selon un autre mode de réalisation avantageux pour réaliser le raccordement de la conduite de dérivation, la branche du T constituant l'élément de branchement pour la conduite de dérivation comporte un élément tubulaire interne ayant un diamètre externe correspondant au diamètre interne de la conduite de dérivation et un élément tubulaire externe concentrique dont le diamètre interne correspond au diamètre externe de la conduite de dérivation, la surface externe de cet élément étant filetée de façon à permettre le vissage d'un émerillon présentant un logement conique.

L'extrémité de l'élément tubulaire externe est prolongée par un anneau denté de section cunéiforme venu de moulage.

Lors du raccordement, la conduite de dérivation est enfilée sur l'élément tubulaire interne qui fait fonction de support et l'étanchéité est obtenue par l'intermédiaire de l'émerillon dont la partie conique est conçue de façon à venir appuyer sur l'anneau denté de section cunéiforme.

L'élément de branchement est réalisé en matière thermoplastique convenant à sa fonction et résistante au fluide traversant la tuyauterie. Des matières thermoplastiques appropriées sont par exemple les polymères de chlorure de vinyle renforcé au choc, le polyéthylène haute densité, le polybutène, les polyoxyméthylènes et les polyamides comme le polyamide 11.

Le raccord de dérivation conforme à l'invention est explicité plus en détail dans la description qui va suivre de certains modes de réalisation. Dans cette description, on se référera aux figures des dessins annexés dans lesquelles :

- la figure 1 est une vue en coupe du raccord de dérivation conforme à l'invention en service.

- la figure 2 est une vue en coupe du raccord de dérivation conforme à l'invention après le montage mais avant la mise en service.

Ainsi qu'il apparaît sur les figures, le raccord de dérivation conforme à l'invention pour raccorder une tuyauterie 1 à une conduite de dérivation 2 en matière thermoplastique comprend un élément de fixation 3, qui est bloqué à l'aide d'une grenouillère 4 sur la tuyauterie 1 et qui comporte un élément de raccordement tubulaire 5 solidaire de l'élément de fixation 3. La paroi intérieure de cet élément 5 est munie d'un filetage 6, qui coopère avec un filetage 7 prévu sur la paroi extérieure d'un élément de branchement tubulaire 8 en forme de T. Une branche du T située à l'opposé de la tuyauterie 1 de l'élément de branchement tubulaire 8 comporte un robinet 9 et un joint 10 coopérant avec le robinet et constitué par un anneau élastique comprimable. Le robinet est maintenu en position axiale par les éléments 11 et rendu étanche par le joint 12.

Le corps principal de l'élément de branchement tubulaire 8 est équipé d'un outil de fraisage 13 constitué par une mèche tubulaire en laiton 13, pourvue de trous 14 et qui déborde de cet élément.

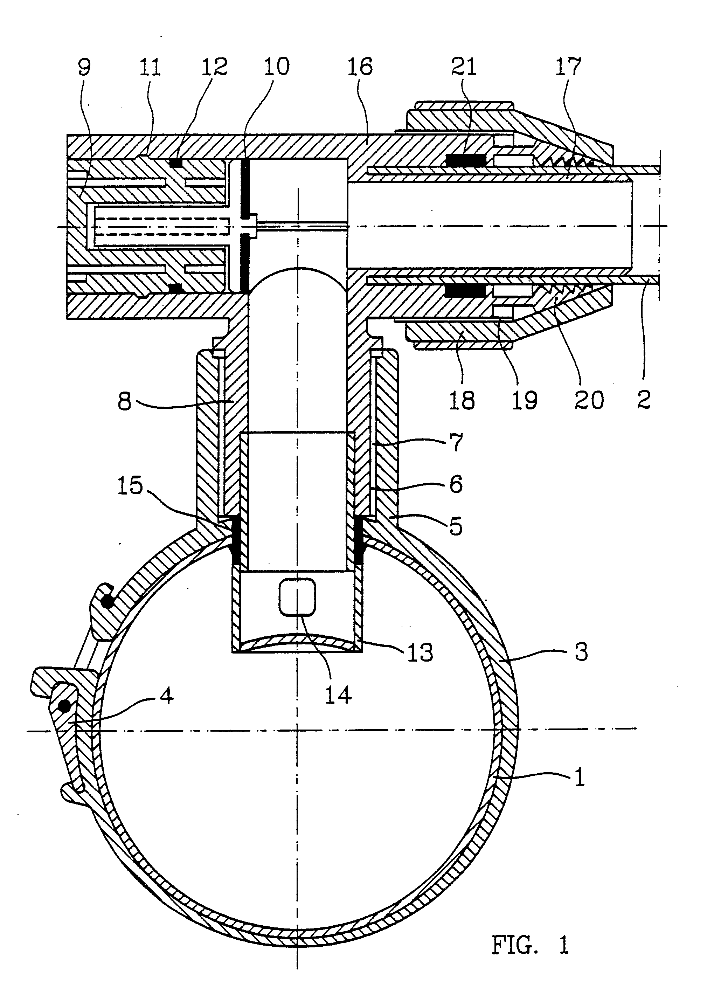

Un joint d'étanchéité est prévu autour de la partie débordante de l'outil de fraisage 13 et en retrait de son extrémité. Le positionnement de ce joint est choisi de façon telle qu'en position de service du raccord (fig.1) ce joint est disposé entre la périphérie de la perforation réalisée dans la tuyauterie par l'outil de fraisage 13 et la surface externe de cet outil.

La seconde branche du T de l'élément de branchement tubulaire 8 comporte un tube latéral externe 16, qui forme un ensemble avec un tube support interne 17 coaxial et un émerillon 18. L'émerillon 18 comporte un filetage interne 19, qui coopère avec un filetage externe prévu sur le tube latéral 16. L'extrémité du tube latéral 16 est munie d'un évasement 20, dont la longueur et le diamètre suffisent pour absorber l'anneau de section cunéiforme du tuyau de branchement, au moins en ce qui concerne une partie de sa longueur dans la direction axiale. De plus, le tube latéral 16 comporte un anneau torique 21 en matériau élastique comprimable, la paroi intérieure de la paroi évasée du tube latéral 16 servant de face d'obturation.

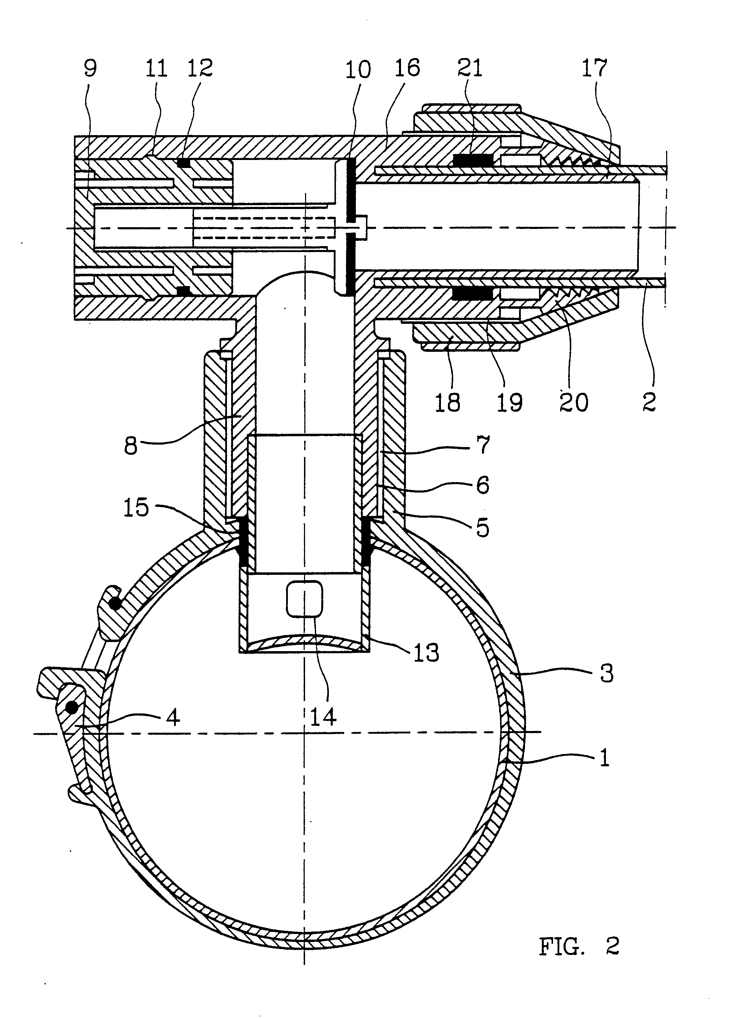

Lors de la mise en service du raccord de dérivation tel que décrit sur une tuyauterie 1, l'élément de fixation 3 est d'abord ouvert et mis autour de la tuyauterie 1. L'élément de fixation 3 est ensuite fixé sur la tuyauterie à l'aide de la grenouillère 4. Ensuite, l'élément de branchement tubulaire 8, rendu étanche par l'obturation temporaire du tupe support 17 via le robinet 9 et le joint 10 (fig.2), est alors vissé dans l'élément de raccordement tubulaire 5 et, dans ce mouvement, l'outil de fraisage 13 perfore la paroi de la tuyauterie 1.

La conduite de dérivation 2 est ensuite accouplée au tube latéral 16 à l'aide notamment de l'évasement 20 et de l'émerillon 18. Le raccord de dérivation peut alors être mis en service par l'ouverture du tube support 17 à l'aide du robinet 9 (fig.1).

## Revendications

1 - Raccord de dérivation pour tuyauterie en matière thermoplastique comportant un élément de fixation entourant la tuyauterie à raccorder et équipé d'un élément de raccordement tubulaire comportant un filetage intérieur et un élement de branchement tubulaire comportant un filetage extérieur pouvant coopérer avec le filetage intérieur précité, et équipé d'un moyen permettant son obturation temporaire tel qu'un robinet, d'un tube latéral de dérivation, d'un outil de fraisage tubulaire disposé dans l'axe de l'élément de branchement et débordant de celui-ci et d'un joint annulaire d'étanchéité caractérisé en ce que le joint annulaire d'étanchéité (15) est disposé autour de la partie débordante de l'outil de fraisage (13) et en retrait de son extrémité de façon telle que, dans le raccord de dérivation monté en service sur la tuyauterie, ce joint (15) est disposé entre la périphérie de la perforation réalisée dans la tuyauterie (1) par l'outil de fraisage (13) et la surface externe de cet outil en retrait de son extrémité.

2 - Raccord de dérivation selon la revendication 1, caractérisé en ce que l'outil de fraisage tubulaire (13) est fixé de façon permanente dans l'élément de branchement.

3 - Raccord de dérivation selon les revendications 1 et 2, caractérisé en ce que le joint annulaire d'étanchéité (15) est fixé entre l'outil de fraisage (13) et l'élément de branchement tubulaire comportant le filetage extérieur (7).

4 - Raccord de dérivation selon la revendication 1, caractérisé en ce que l'élément de fixation équipé d'un branchement tubulaire est réalisé en une seule pièce.

5 - Raccord de dérivation selon la revendication 1, caractérisé en ce que l'élément de fixation équipé d'un branchement tubulaire a une épaisseur variable, l'épaisseur minimum étant située à l'opposé du système de blocage de l'élément de fixation entourant la tuyauterie.

FIG. 1

EP 0 360 312 A1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3554217 (HENRY EHRENS ET AL.)<br>* abrégé; figure 5 *<br>--- | 1, 2 | F16L47/00 |
| A | FR-A-2381230 (DROUVIN R.)<br>* page 7, ligne 18 - page 8, ligne 26; figure 2 *<br>--- | 1 | |
| A | FR-A-2610695 (ETS. JAYOT)<br>* figure 1 *<br>--- | 1 | |
| D,A | FR-A-2285567 (POLVA NEDERLAND)<br>* figure 1 *<br>--- | 1 | |
| A | CH-A-416236 (GEORG FISCHER AG)<br>----- | | |

**DOMAINES TECHNIQUES RECHERCHES (Int. Cl.5 )**

F16L
F16K

Le présent rapport a été établi pour toutes les revendications

| Lieu de la recherche | Date d'achèvement de la recherche | Examinateur |
|---|---|---|
| BERLIN | 21 DECEMBRE 1989 | SCHAEFFLER C.A.A. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................
& : membre de la même famille, document correspondant

EPO FORM 1503 03.82 (P0402)